# EUROPÄISCHE PATENTSCHRIFT

(11) **EP 1 454 199 B1**
(45) Veröffentlichungstag und Bekanntmachung des Hinweises auf die Patenterteilung: **26.07.2006**
(21) Anmeldenummer: 02805259.5
(22) Anmeldetag: 04.12.2002
(51) Int. Cl.: G05B 19/05

(54) **VERFAHREN ZUR AKTUALISIERUNG VON ELEKTRONISCH MODIFIZIERBAREN KOMPONENTEN EINES AUTOMATISIERUNGSGERÄTES**
METHOD FOR UPDATING ELECTRONICALLY MODIFIABLE COMPONENTS OF AN AUTOMATION DEVICE
PROCEDE DE MISE A JOUR DE COMPOSANTES ELECTRONIQUEMENT MODIFIABLES D'UN APPAREIL D'AUTOMATISATION

(30) Priorität: 13.12.2001 DE 10161321
(43) Veröffentlichungstag der Anmeldung: 08.09.2004
(73) Patentinhaber: SIEMENS AKTIENGESELLSCHAFT, 80333 München (DE)
(72) Erfinder: TIEGELKAMP, Michael, 90602 Pyrbaum (DE); HÖFLER, Werner, 90542 Eckental (DE)
(86) Internationale Anmeldenummer: PCT/DE2002/004446
(87) Internationale Veröffentlichungsnummer: WO 2003/054642

(56) Entgegenhaltungen:
- US-B1- 6 282 709

## Beschreibung

Die Erfindung betrifft ein Verfahren zur Aktualisierung von elektronisch modifizierbaren Komponenten eines Automatisierungsgerätes zur Optimierung des Ablaufs eines Steuerprogramms auf dem Automatisierungsgerät.

Bekannt ist das so genannte "Updaten", das Einspielen einer aktuellen oder neueren Version einer Software auf einem Zielgerät, z.B. einem so genannten Personalcomputer. Dabei wird die Software auf dem Zielgerät installiert und eine evtl. auf dem Zielgerät zuvor vorhandene ältere Version der Software ersetzt. Beim Updaten einer komplexen Software, zum Beispiel beim Updaten des so genannten Betriebssystems, werden eine Vielzahl von einzelnen Softwarekomponenten auf dem Zielgerät installiert, von denen einige, z.B. so genannte "Einheitentreiber" (device driver), zur Ansteuerung der an das Zielgerät angeschlossenen Hardware (Bildschirm, Drucker, etc.) vorgesehen sind. Nach dem Update hat der Benutzer des Zielgerätes eine aktualisierte Software zur Verfügung. Vielfach benötigt der einzelne Benutzer den kompletten Leistungsumfang eines Softwarepaketes jedoch nicht, so dass in ungünstiger Weise Speicherplatz durch Softwarekomponenten belegt ist, die der Benutzer nicht verwendet. Daneben geht häufig eine gesteigerte Leistungsvielfalt einzelner Softwarekomponenten zu Lasten der Geschwindigkeit mit der solche Softwarekomponenten die für sie vorgesehenen Aufträge abarbeiten. Als Beispiel mag hier ein Einheitentreiber zur Ansteuerung eines Druckers dienen: In einer ersten Version ist der Einheitentreiber nur zur Ansteuerung weniger Drucker jeweils einer Baureihe eines bestimmten Herstellers geeignet. Mit jedem neuen Drucker dieses Herstellers in dieser Baureihe wird der Einheitentreiber aktualisiert um auch eventuell neu hinzugekommene Funktionen der neuesten Drucker optimal ausnutzen zu können. Dies erhöht zum einen den Umfang des Einheitentreibers und den von ihm nach einer Installation auf einem Zielgerät belegten Speicherplatz. Daneben wird aber auch die Verarbeitungsgeschwindigkeit ungünstig beeinflusst, weil z.B. bei Ausführung einzelner Funktionen des Einheitentreibers vermehrt Fallunterscheidungen getroffen werden müssen, um die für den jeweils angeschlossenen Drucker günstigste Aufbereitung des Datenstroms zu erreichen. Damit ergibt sich, dass für einen Benutzer, der ein Update z.B. seines Betriebssystems installiert, das auch Einheitentreiber der oben beschriebenen Art umfasst, mit der neuen Software Leistungseinbußen einhergehen können, wenn das Zielgerät selbst und daran angeschlossene Geräte unverändert bleiben.

Der Erfindung liegt die Aufgabe zugrunde, ein Verfahren zur Aktualisierung von elektronisch modifizierbaren Komponenten eines Automatisierungsgerätes zur Optimierung des Ablaufs eines Steuerprogramms auf dem Automatisierungsgerät anzugeben, bei dem solche Nachteile vermieden werden können. Elektronisch modifizierbare Komponenten sind dabei z.B. die genannten Einheitentreiber, so genannte Bibliotheksfunktionen, insbesondere solche, die zur Laufzeit nachladbar sind, Funktionsmodule, etc. Der Begriff elektronisch modifizierbare Komponenten umfasst damit Softwarekomponenten jeglicher Art, die auf einem Zielgerät installiert und zu einem späteren Zeitpunkt wieder deinstalliert oder durch eine oder mehrere andere Softwarekomponenten ersetzt werden können. Solche Steuerungskomponenten besitzen den Vorteil, dass ihre Software bzw. Firmware bei gleichbleibender Hardware ausgetauscht werden kann. Dies wird notwendig im Falle einer erforderlich werdenden Fehlerbehebung dieser Software sowie für Austausch oder Nachladen technologischer Funktionen und Bausteine.

Diese Aufgabe wird erfindungsgemäß mit den Merkmalen des Anspruchs 1 gelöst. Dazu ist ein Aktualisierungsmanager vorgesehen, der anhand von Informationen über das Steuerprogramm und über Abhängigkeiten zwischen jeder elektronisch modifizierbaren Komponente und einer Hardware des Automatisierungsgerätes einerseits sowie zwischen den elektronisch modifizierbaren Komponenten untereinander andererseits diejenige Kombination von elektronisch modifizierbaren Komponenten ermittelt, die einen optimalen Ablauf des Steuerprogramms ermöglicht.

Die Erfindung geht dabei von der Erkenntnis aus, dass das Steuerprogramm zwar mit einer Vielzahl von Kombinationen elektronisch modifizierbarer Komponenten bestimmungsgemäß auf dem Automatisierungsgerät zum Ablauf gebracht werden kann, dass aber nur eine oder wenige Kombinationen einen optimalen Ablauf des Steuerprogramms, etwa im Hinblick auf eine Verarbeitungsgeschwindigkeit, ermöglichen. Mit dem Aktualisierungsmanager können anhand von einer Vielzahl von Informationen über das Steuerprogramm, über die Hardware des Automatisierungsgerätes sowie über die elektronisch modifizierbaren Komponenten selbst solche Kombinationen ermittelt werden.

Der Vorteil der Erfindung besteht darin, dass ein Benutzer bei der Installation eines Steuerprogramms auf einem Automatisierungsgerät unterstützt wird, indem ihm automatisch eine oder mehrere optimale Kombinationen von elektronisch modifizierbaren Komponenten präsentiert wird. Der Benutzer kann die Installation einer optimalen Kombination auf dem Automatisierungsgerät veranlassen. Er kann ggf. sogar noch unter verschiedenen "optimalen Kombinationen" auswählen, wenn durch den Aktualisierungsmanager z.B. eine erste optimale Kombination mit einer Optimierung im Hinblick auf den Speicherbedarf, eine zweite optimale Kombination mit einer Optimierung im Hinblick auf die Verarbeitungsgeschwindigkeit und eine dritte optimale Kombination mit einer Optimierung im Hinblick auf einen maximal erreichbaren Datendurchsatz bei einem durch das Steuerprogramm angesteuerten Kommunikationsmedium, etwa einem lokalen Feldbus, ermittelt wurde. Eine Konstellation mit mehreren optimalen Kombinationen kann sich ergeben, wenn z.B. eine erste Komponente, die massgeblich die Verarbeitungsgeschwindigkeit beeinflusst, nicht zusammen mit einer zweiten Komponente, die massgeblich den Datendurchsatz beim Feldbus beeinflusst, kompatibel ist. Mit einer Kombination elektronisch modifizierbarer Komponenten, die diese beiden Komponenten umfasst, ist ein Ablauf des Steuerprogramms nicht möglich, da ja beide Komponenten nicht miteinander kompatibel sind. Es bleibt also nur die Auswahl zwischen einer Kombination elektronisch modifizierbarer Komponenten mit der ersten Komponente und einer Kombination elektronisch modifizierbarer Komponenten mit der zweiten Komponente.

Vorteilhafte Ausgestaltungen der Erfindung sind Gegenstand der Unteransprüche.

Wenn der Aktualisierungsmanager die ermittelte Kombination von elektronisch modifizierbaren Komponenten an ein Ladeprogramm des Automatisierungsgerätes weiterleitet, das jede Komponente auf dem Automatisierungsgerät installiert, kann das Verfahren - abgesehen von Fehler- oder Auswahlsituationen - ohne einen Eingriff eines Benutzers ablaufen. Dies macht eine Optimierung gemäß der Erfindung auch über große Distanzen hinweg möglich, wenn z.B. Programmiergerät und Automatisierungsgerät über das Internet kommunikativ verbunden sind.

Über das Steuerprogramm werden durch einen Benutzer Informationen vorgegeben. Vorteilhaft werden diese Informationen durch den Aktualisierungsmanager automatisch erweitert, indem das Steuerprogramm in Bezug auf darin implizit oder explizit enthaltene Anforderungen analysiert wird. Jede erkannte Anforderung, z.B. die Anforderung einen bestimmten Dienst des Betriebssystems zu nutzen, erweitert die Informationen über das Steuerprogramm.

Vorteilhaft greift der Aktualisierungsmanager auf eine erste Datenbasis zu, welcher Informationen über die zu Verfügung stehenden elektronisch modifizierbaren Komponenten entnehmbar sind. Wenn durch die Analyse des Steuerprogramms feststeht, dass ein bestimmter Betriebssystemdienst genutzt wird und dieser Betriebssystemdienst in einer Mehrzahl von Versionen zur Verfügung steht, ist der ersten Datenbasis hinsichtlich dieses Betriebssystemdienstes z.B. entnehmbar, worin sich die einzelnen Versionen des Betriebssystemdienstes unterscheiden. Damit ist für den Aktualisierungsmanager automatisch ermittelbar, welche Komponente aus einer Liste jeweils grundsätzlich geeigneter Komponenten eine besonders schnelle Abarbeitung oder eine besonders effiziente Belegung des zu Verfügung stehenden Speicherplatzes erwarten lässt.

Weiter vorteilhaft greift der Aktualisierungsmanager auf eine zweite Datenbasis zu, welcher Informationen über die Hardware des Automatisierungsgerätes entnehmbar sind. Zu den Informationen des Benutzers über das Steuerprogramm (siehe oben) gehört auch eine Information über die Zielhardware, d.h. eine Angabe des Typs oder der Leistungsklasse des Automatisierungsgerätes, auf dem das Steuerprogramm zur Ausführung kommen soll. In der zweiten Datenbasis sind Informationen zur Hardware einer Vielzahl von Automatisierungsgeräten gespeichert. Mit der Information über die Zielhardware kann aus dieser zweiten Datenbasis gezielt die erforderliche Hardwareinformation abgerufen werden. Die Hardwareinformation ist erforderlich um z.B. automatisch ermitteln zu können, welche Komponenten zum Ablauf auf der konkreten Hardware des Automatisierungsgerätes geeignet sind.

Weiter vorteilhaft greift der Aktualisierungsmanager auf eine dritte Datenbasis zu, aus welcher Informationen über die Kombinierbarkeit und/oder Kompatibilität einzelner elektronisch modifizierbarer Komponenten entnommen werden können. Aus einer Mehrzahl von Komponenten, die zur Erfüllung bestimmter Anforderungen des Steuerprogramms geeignet sind, kommen diejenigen Komponenten für eine weitere Auswahl in Betracht, die zum Ablauf auf der konkreten Hardware des Automatisierungsgerätes geeignet sind. Unter den damit verbleibenden Komponenten kommen für eine weitere Auswahl diejenigen in Betracht, die mit weiteren, zur Erfüllung anderer Anforderungen des Steuerprogramms nötigen Komponenten kombinierbar und/oder kompatibel sind. Mit einem Zugriff auf die Informationen der dritten Datenbasis kann diese Auswahl durch den Automatisierungsmanager automatisch getroffen werden.

Wenn eine oder jede elektronisch modifizierbare Komponente, die bereits auf dem Automatisierungsgerät installiert ist, jedoch nicht zu der ermittelten Kombination von elektronisch modifizierbare Komponenten zur Optimierung des Ablaufs des Steuerprogramms gehören, auf dem Automatisierungsgerät deinstalliert wird, kann vorteilhaft die Funktionalität des Automatisierungsgerätes exakt auf die Erfordernisse des Steuerprogramms abgestimmt werden und jede unnötige Funktionalität auf dem Automatisierungsgerät gelöscht werden.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Darin zeigen
- FIG 1: eine Entwicklungsumgebung mit einem Programmiergerät und einem Automatisierungsgerät und
- FIG 2: eine schematische Darstellung der Funktionalität des Aktualisierungsmanagers.

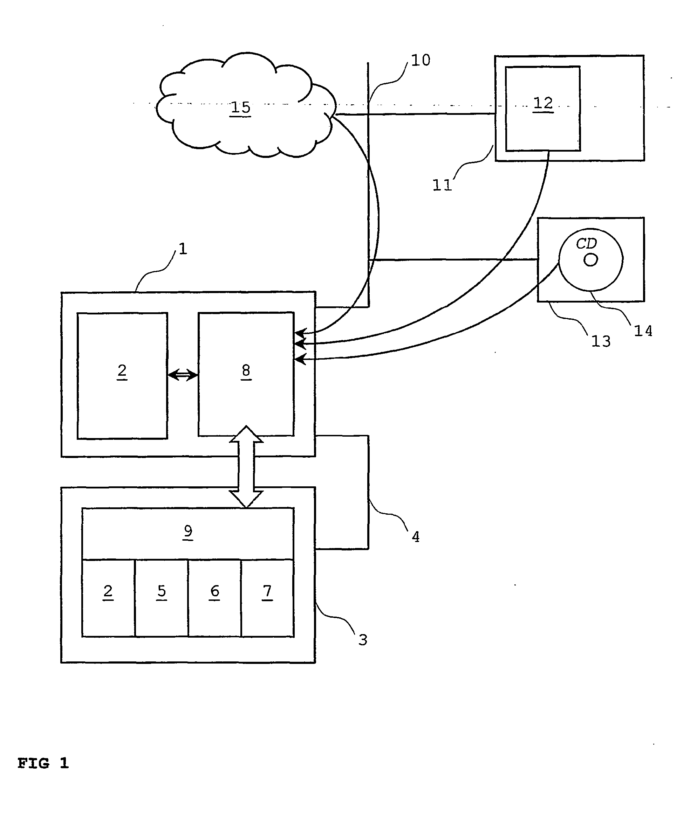

FIG 1 zeigt ein Programmiergerät 1 mit einem Steuerprogramm 2. Das Steuerprogramm 2 ist wie üblich in einem Speicher (nicht dargestellt) des Programmiergerätes 1 gespeichert. Das Steuerprogramm 2 wird auf dem Programmiergerät 1 erstellt oder modifiziert. Das fertige Steuerprogramm 2 ist zum Ablauf auf einem Automatisierungsgerät 3 vorgesehen. Aus dem Speicher des Programmiergerätes 1 wird das Steuerprogramm 2 über eine Kommunikationsverbindung 4, z.B. einen Feldbus 4, in einen Speicher (nicht dargestellt) des Automatisierungsgerätes 3 transferiert.

Zur Ausführung des Steuerprogramms 2 auf dem Automatisierungsgerät 3 sind weitere Softwarekomponenten 5, 6, 7 erforderlich. Zu einer ersten Gruppe 5 von Softwarekomponenten gehört ein so genannter Baustein 5, der nach Art eines so genannten Makros oder einer so genannten Bibliotheksfunktion ein bestimmte Funktionalität bietet. Der Ablauf des Steuerprogramms 2 kann eine Vielzahl von Bausteinen 5 erfordern, z.B. Bausteine 5 für typische Grundfunktionen, wie z.B. logische Verknüpfungen, oder Bausteine 5 für technologische Funktionen, wie z.B. Regelungsfunktionen. Zu einer zweiten Gruppe 6 von Softwarekomponenten gehört eine Betriebssystemfunktion 6, die z.B. als Schnittstelle zur Hardware des Automatisierungsgerätes 3 fungiert oder zur Prioritäts- oder zur Ablaufebenensteuerung vorgesehen ist. Der Ablauf des Steuerprogramms 2 kann eine Vielzahl von Betriebssystemfunktionen 6 erfordern. Zu einer dritten Gruppe 7 von Softwarekomponenten gehört eine so genannte Hardwarekonfiguration 7 zur Konfiguration und/oder Diagnose von an das Automatisierungsgerät 3 angeschlossener Sensorik oder Aktorik zur Steuerung und/oder Überwachung eines technischen Prozesses (nicht dargestellt). Je nach Art und Umfang der an das Automatisierungsgerät 3 angeschlossenen Prozessperipherie kann eine Vielzahl von Hardwarekonfiguartinsdiensten 7 zum Betrieb des Steuerprogramms 2 erforderlich sein.

Jeder Baustein 5, jede Betriebssystemfunktion 6 und jeder Hardwarekonfigurationsdienst 7 ist eine elektronisch modifizierbare Komponente 5, 6, 7. Genau wie jede Komponente 5, 6, 7 in den Speicher des Automatisierungsgerätes 3 geladen werden kann und damit auf dem Automatisierungsgerät 3 installiert und verwendbar ist, kann jede Komponente 5, 6, 7 auch wieder deinstalliert werden und aus dem Speicher des Automatisierungsgerätes 3 gelöscht werden.

Zur Optimierung des Ablaufs des Steuerprogramms 2 auf dem Automatisierungsgerät 3 im Wege einer Aktualisierung solcher elektronisch modifizierbarer Komponenten 5, 6, 7 des Automatisierungsgerätes 3 ist ein Aktualisierungsmanager 8 vorgesehen. Der Aktualisierungsmanager 8 ermittelt automatisch anhand von Informationen über das Steuerprogramm 2 sowie über Abhängigkeiten zwischen jeder elektronisch modifizierbaren Komponente 5, 6, 7 und der Hardware des Automatisierungsgerätes 3 sowie zwischen den elektronisch modifizierbaren Komponenten 5, 6, 7 untereinander diejenige Kombination von elektronisch modifizierbaren Komponenten 5, 6, 7, die einen optimalen Ablauf des Steuerprogramms 2 ermöglicht.

Die ermittelte Kombination von elektronisch modifizierbaren Komponenten 5, 6, 7, im folgenden die optimale Kombination 5, 6, 7, wird an ein Ladeprogramm 9 des Automatisierungsgerätes 3 übermittelt, das jede Komponente 5, 6, 7 der optimalen Kombination auf dem Automatisierungsgerät 3 installiert.

Der Aktualisierungsmanager 8 hat über eine Kommunikationsverbindung 10, z.B. einen so genannten Zellbus 10 (Ethernet) Zugriff z.B. auf ein weiteres Programmiergerät 11 und dessen Speicher 12 und/oder einen Datenserver 13 und bei diesem, z.B. auf einer so genannten CompactDisk 14 (CD) vorgehaltenen Installationsdaten und/oder das so genannte Internet 15.

Aus jeder dieser Datenquellen 12, 14, 15 kann der Aktualisierungsmanager 8 einzelne oder alle elektronisch modifizierbaren Komponenten 5, 6, 7 beziehen. Dies erfolgt z.B. unter Ver wendung standardisierter Kommunikationsprotokolle wie z.B. FTP (File Transfer Protocol) o.ä.

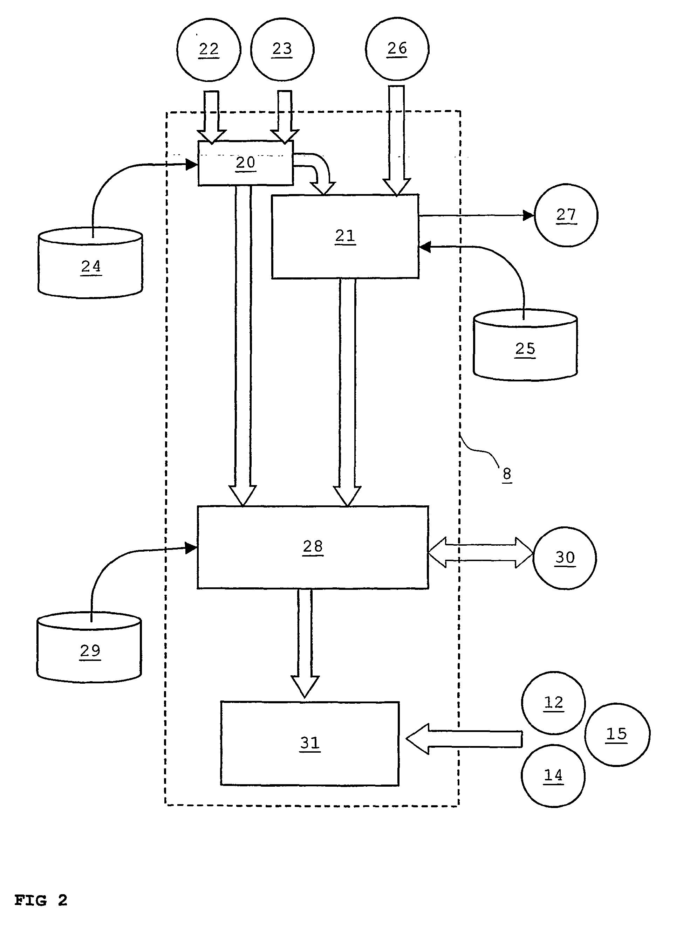

FIG 2 zeigt eine schematische Darstellung der Funktionalität des Aktualisierungsmanagers 8. Der Aktualisierungsmanager 8 umfasst eine Analyseeinheit 20 und eine Adaptionseinheit 21. Die Analyseeinheit 20 greift auf Kriterien und Parameter 22 der Anwender sowie auf Merkmale 23 des Steuerprogramms 2 (FIG 1) zu. Daneben hat die Analyseeinheit 20 Zugriff auf eine erste Datenbasis 24 und erhält dabei Informationen über die zu Verfügung stehenden elektronisch modifizierbaren Komponenten 5, 6, 7 (FIG 1), das so genannte "Domänenwissen". Die von der Analyseeinheit 20 zusammengestellten und ggf. aufbereiteten Informationen werden an die Adaptionseinheit 21 weitergeleitet. Die Adaptionseinheit 21 ist zur Adaption des Steuerprogramms 2 auf das konkrete Automatisierungsgerät 3 (FIG 1) vorgesehen. Dazu hat die Adaptionseinheit 21 Zugriff auf eine zweite Datenbasis 25 mit Informationen zur Hardware und zum Betriebssystem möglicher Zielgeräte. Aus dieser zweiten Datenbasis 25 entnimmt die Adaptionseinheit 21 anhand von Daten 26 hinsichtlich des tatsächlich als Zielgerät zum Einsatz kommenden Automatisierungsgerätes 3 Informationen zu dessen Hardware und/oder dessen Betriebssystem. Wenn keine den vorgegebenen Daten 22, 23, 26 entsprechende Adaption des Steuerprogramms 2 für das Automatisierungsgerät 3 möglich ist, wird ein entsprechender Hinweis 27, z.B. eine Fehlermeldung 27, für den Benutzer ausgegeben.

Die von Analyseeinheit 20 und Adaptionseinheit 21 zusammengestellten und ggf. aufbereiteten Informationen werden an eine Kombinationseinheit 28 weitergeleitet, die Zugriff auf eine dritte Datenbasis 29 hat und aus dieser Informationen über die Kombinierbarkeit und/oder Kompatibilität einzelner elektronisch modifizierbarer Komponenten 5, 6, 7 entnimmt. Mit diesen Informationen erzeugt die Kombinationseinheit 28 eine Liste der benötigten elektronisch modifizierbaren Komponenten 5, 6, 7, die einen optimalen Ablauf des Steuerprogramms 2 ermöglicht. Zudem kann die ermittelte Kombination elektronisch modifizierbarer Komponenten 5, 6, 7 im Wege eines Dialogs 30 mit einem Benutzer angepasst werden, um etwa aufgetretene Fehler zu beheben, Einschränkungen der Kompatibilität aufzuheben oder explizit zuzulassen oder Optimierungen hinsichtlich einer Rückwirkungsfreiheit vorzunehmen. Die von der Kombinationseinheit 28 erzeugte Liste der optimalen Kombination elektronisch modifizierbarer Komponenten 6, 7, 8 wird einer Transfereinheit 31 übermittelt, welche die eigentlichen Daten jeder elektronisch modifizierbaren Komponente 6, 7, 8 vermittels eines Zugriffs auf Datenquellen 12, 14, 15 (FIG 1) z.B. auf das Internet 15, beschafft. Die Transfereinheit 31 überträgt die ausgewählte Kombination elektronisch modifizierbarer Komponenten 6, 7, 8 schließlich an das Ladeprogramm 9 (FIG 1) des Automatisierungsgerätes 3, das jede Komponente 5, 6, 7 der optimalen Kombination auf dem Automatisierungsgerät 3 installiert.

Damit lässt sich die Erfindung kurz wie folgt darstellen:

Es wird ein Verfahren zur Aktualisierung von elektronisch modifizierbaren Komponenten 5, 6, 7 eines Automatisierungsgerätes 3 zur Optimierung des Ablaufs eines Steuerprogramms 2 auf dem Automatisierungsgerät 3 angegeben, bei dem ein Aktualisierungsmanager 8 anhand von Informationen über das Steuerprogramm 2 sowie über Abhängigkeiten zwischen jeder elektronisch modifizierbaren Komponente 5, 6, 7 und einer Hardware des Automatisierungsgerätes 3 sowie zwischen den elektronisch modifizierbaren Komponenten 5, 6, 7 untereinander diejenige Kombination von elektronisch modifizierbaren Komponenten 5, 6, 7 ermittelt, die einen optimalen Ablauf des Steuerprogramms 2 ermöglicht.

## Patentansprüche

1. Verfahren zur Aktualisierung von elektronisch modifizierbaren Komponenten (5, 6, 7) eines Automatisierungsgerätes (3) zur Optimierung des Ablaufs eines Steuerprogramms (2) auf dem Automatisierungsgerät (3), wobei ein Aktualisierungsmanager (8) anhand von Informationen über das Steuerprogramm (2) sowie über Abhängigkeiten zwischen jeder elektronisch modifizierbaren Komponente (5, 6, 7) und einer Hardware des Automatisierungsgerätes (3) sowie zwischen den elektronisch modifizierbaren Komponenten (5, 6, 7) untereinander diejenige Kombination von elektronisch modifizierbaren Komponenten (5, 6, 7) ermittelt, die einen optimalen Ablauf des Steuerprogramms (2) ermöglicht.

2. Verfahren nach Anspruch 1, wobei der Aktualisierungsmanager (8) die ermittelte Kombination von elektronisch modifizierbaren Komponenten (5, 6, 7) an ein Ladeprogramm (9) des Automatisierungsgerätes (3) weiterleitet, das jede Komponente (5, 6, 7) auf dem Automatisierungsgerät (3) installiert.

3. Verfahren nach Anspruch 1 oder 2, wobei die Informationen über das Steuerprogramm (2) zunächst durch einen Benutzer vorgegeben werden und durch den Aktualisierungsmanager (8) automatisch erweitert werden, indem das Steuerprogramm (2) in Bezug auf darin enthaltene Anforderungen analysiert wird und jede erkannte Anforderung die Informationen über das Steuerprogramm (2) erweitert.

4. Verfahren nach Anspruch 1, 2 oder 3, wobei der Aktualisierungsmanager (8) auf eine erste Datenbasis (24) zugreift und aus dieser Informationen über die zu Verfügung stehenden elektronisch modifizierbaren Komponenten (5, 6, 7) entnimmt.

5. Verfahren nach einem der obigen Ansprüche, wobei der Aktualisierungsmanager (8) auf eine zweite Datenbasis (25) zugreift und aus dieser Informationen über die Hardware des Automatisierungsgerätes (3) entnimmt.

6. Verfahren nach einem der obigen Ansprüche, wobei der Aktualisierungsmanager (8) auf eine dritte Datenbasis (29) zugreift und aus dieser Informationen über die Kombinierbarkeit und/oder Kompatibilität einzelner elektronisch modifizierbarer Komponenten (5, 6, 7) entnimmt.

7. Verfahren nach einem der obigen Ansprüche, wobei eine oder jede elektronisch modifizierbare Komponente (5, 6, 7), die bereits auf dem Automatisierungsgerät (3) installiert ist, jedoch nicht zu der ermittelten Kombination von elektronisch modifizierbare Komponenten (5, 6, 7) zur Optimierung des Ablaufs des Steuerprogramms (2) gehören, auf dem Automatisierungsgerät (3) deinstalliert wird.

## Claims

1. , Method for updating electronically modifiable components (5, 6, 7) of an automation appliance (3) for the purpose of optimizing the execution of a control program (2) on the automation appliance (3), where an update manager (8) uses information about the control program (2) and also about dependencies between each electronically modifiable component (5, 6, 7) and a piece of hardware in the automation appliance (3) and also between the electronically modifiable components (5, 6, 7) themselves to ascertain that combination of electronically modifiable components (5, 6, 7) which allows optimum execution of the control program (2).

2. Method according to Claim 1, where the update manager (8) forwards the ascertained combination of electronically modifiable components (5, 6, 7) to a loading program (9) in the automation appliance (3) which installs each component (5, 6, 7) on the automation appliance (3).

3. Method according to Claim 1 or 2, where the information about the control program (2) is first of all prescribed by a user and is automatically extended by the update manager (8) by virtue of the control program (2) being analysed in relation to requirements contained therein, and each requirement recognized extending the information about the control program (2).

4. Method according to Claim 1, 2 or 3, where the update manager (8) accesses a first database (24) and picks up therefrom information about the available electronically modifiable components (5, 6, 7).

5. Method according to one of the preceding claims, where the update manager (8) accesses a second database (25) and picks up therefrom information about the hardware in the automation appliance (3).

6. Method according to one of the preceding claims, where the update manager (8) accesses a third database (29) and picks up therefrom information about the combinability and/or compatibility of individual electronically modifiable components (5, 6, 7).

7. Method according to one of the preceding claims, where one or each electronically modifiable component (5, 6, 7) which is already installed on the automation appliance (3) but which is not part of the ascertained combination of electronically modifiable components (5, 6, 7) for the purpose of optimizing the execution of the control program (2) is uninstalled on the automation appliance (3).

## Revendications

1. Procédé de mise à jour de composants modifiables électroniquement (5, 6, 7) d'un appareil d'automatisation (3) pour l'optimisation du déroulement d'un programme de commande (2) sur l'appareil d'automatisation (3), un gestionnaire de mise à jour (8) déterminant à l'aide d'informations sur le programme de commande (2) ainsi que sur des dépendances entre chaque composant modifiable électroniquement (5, 6, 7) et un matériel de l'appareil d'automatisation (3) ainsi qu'entre les composants modifiables électroniquement (5, 6, 7) entre eux la combinaison de composants modifiables électroniquement (5, 6, 7) qui permet un déroulement optimal du programme de commande (2).

2. Procédé selon la revendication 1, le gestionnaire de mise à jour (8) retransmettant la combinaison déterminée de composants modifiables électroniquement (5, 6, 7) à un programme de chargement (9) de l'appareil d'automatisation (3), lequel programme de chargement installe chaque composant (5, 6, 7) sur l'appareil d'automatisation (3).

3. Procédé selon la revendication 1 ou 2, les informations sur le programme de commande (2) étant d'abord prescrites par un utilisateur et complétées automatiquement par le gestionnaire de mise à jour (8) par le fait que le programme de commande (2) est analysé pour connaître les exigences qu'il contient et que chaque exigence reconnue complète les informations sur le programme de commande (2).

4. Procédé selon la revendication 1, 2 ou 3, le gestionnaire de mise à jour (8) accédant à une première base de données (24) et extrayant de celle-ci des informations sur les composants modifiables électroniquement (5, 6, 7) disponibles.

5. Procédé selon l'une des revendications précédentes, le gestionnaire de mise à jour (8) accédant à une deuxième base de données (25) et extrayant de celle-ci des informations sur le matériel de l'appareil d'automatisation (3).

6. Procédé selon l'une des revendications précédentes, le gestionnaire de mise à jour (8) accédant à une troisième base de données (29) et extrayant de celle-ci des informations sur les possibilités de combinaison et/ou la compatibilité de différents composants modifiables électroniquement (5, 6, 7).

7. Procédé selon l'une des revendications précédentes, un composant modifiable électroniquement ou chaque composant modifiable électroniquement (5, 6, 7) qui est déjà installé sur l'appareil d'automatisation (3) mais qui n'appartient pas à la combinaison déterminée de composants modifiables électroniquement (5, 6, 7) pour l'optimisation du déroulement du programme de commande (2) étant désinstallé sur l'appareil d'automatisation (3).
